# EUROPÄISCHE PATENTSCHRIFT

(11) **EP 0 317 580 B1**
(45) Veröffentlichungstag und Bekanntmachung des Hinweises auf die Patenterteilung: **30.06.1993**
(21) Anmeldenummer: 88903767.7
(22) Anmeldetag: 06.05.1988
(51) Int. Cl.: H02K 5/20, H02K 9/06

(54) **ELEKTROMOTOR, INSBESONDERE ANTRIEBSMOTOR FÜR EINE FASS- ODER BEHÄLTERPUMPE**
ELECTRIC MOTOR, IN PARTICULAR A DRIVE MOTOR FOR A DRUM PUMP OR SUBMERSIBLE PUMP
MOTEUR ELECTRIQUE, NOTAMMENT MOTEUR D'ENTRAINEMENT POUR POMPE ELECTRIQUE PORTATIVE OU POMPE IMMERSIBLE

(30) Priorität: 08.05.1987 DE 3715274
(43) Veröffentlichungstag der Anmeldung: 31.05.1989
(73) Patentinhaber: FIRMA KARL LUTZ, 97877 Wertheim/Main (DE)
(72) Erfinder: LUTZ, Karl, D-6980 Wertheim (DE)
(74) Vertreter: Geitz, Heinrich, Dr.-Ing.
(86) Internationale Anmeldenummer: DE8800269
(87) Internationale Veröffentlichungsnummer: WO8809077

(56) Entgegenhaltungen:
- DE-A- 2 617 860
- DE-A- 3 147 501
- DE-A- 3 514 684
- DE-A- 3 514 685
- FR-A- 2 160 215
- " BROWN BOVERI MITTEILUNGEN" von Mai 1954, Nr 5 Seiten 139-144; DE-PS-539109; DE-PS-839225

## Beschreibung

Die Erfindung betrifft einen Elektromotor mit einem Motorgehäuse, in dem der Stator und Läufer aufgenommen sind und letzterer drehbar gelagert ist, mit einem auf der aus dem Motorgehäuse herausgeführten Motorwelle drehfest angeordneten Lüfterrad zum Fördern von Kühlluft, mit einer zwei Gehäusekappen aufweisenden äußeren Umhüllung aus elektrisch nicht leitendem Material, innerhalb der das Lüfterrad aufgenommen ist und die unter Ausbildung von Durchströmwegen für Kühlluft das Motorgehäuse zwecks Außenbelüftung und zur Schutzisolierung umschließt, und mit einer elektrisch nicht leitenden Verkleidung des abtriebsseitigen Endes der Motorwelle. Insbesondere bezieht sich die Erfindung auf einen Elektromotor zum Antrieb einer Faß- oder Behälterpumpe.

Aus der DE-OS 35 14 685 ist ein Elektromotor bekannt, der innerhalb eines in einer Querebene geteilten Kunststoffgehäuses aufgenommen ist. Das Kunststoffgehäuse umschließt den Motor mit Abstand und ist im Bereich seiner stirnseitigen Kappen mit Durchströmöffnungen für Kühlluft ausgerüstet. Die Kühlluft wird dabei mittels eines Lüfterrades gefördert, das auf der der Abtriebsseite des Motors gegenüberliegenden Seite außerhalb des Motorgehäuses, jedoch innerhalb des Kunststoffgehäuses angeordnet ist. Innerhalb des Kunststoffgehäuses ist der Motor derart gehaltert, daß ihn ein Luftspalt zum Führen der Kühlluft umgibt.

Bei dem Motor nach der DE-OS 35 14 685 handelt es sich um einen sogenannten Rumpfmotor mit Außenbelüftung, der zum Antrieb eines Betonmischers oder dergleichen bestimmt ist. Als Antriebsmotor für Einrichtungen, die in explosionsgefährdeten Räumen eingesetzt werden oder zum Fördern von explosible Dämpfe absondernden Flüssigkeiten dienen sollen, wäre dieser Motor hingegen nicht brauchbar. Insbesondere wäre der vorbekannte Motor nicht als Antriebsmaschine für Faß- oder Behälterpumpen geeignet.

Auch aus der DE-C-539 109 ist ein als mantelgekühlte Maschine ausgebildeter Elektromotor bekannt, bei dem der eigentliche Motor unter Ausbildung von Durchströmspalten von einem metallischen Außengehäuse umgeben und die Kühlluft mittels eines abtriebsseitig auf der Motorwelle gelagerten Lüfterrades zur Abtriebsseite hin gefördert wird. Dabei handelt es sich um eine elektrische Maschine ursprünglich offener Bauart mit Durchzugsbelüftung, die durch beidendig mit dem Stator verschraubte Deckel in eine geschlossene und mantelbelüftete Maschine umgebaut worden ist. Auch dieser Motor ist als Antriebsmotor für Einrichtungen in explosionsgefährdeten Räumen oder zum Fördern von explosible Dämpfe absondernden Flüssigkeiten nicht geeignet.

Gleiches gilt auch für die für verschiedene Schutzarten umbaubare dynamoelektrische Maschine nach der DE-C-839 225, aus der ebenfalls verschiedene Ausführungsformen mantelbelüfteter Elektromotoren mit Kühlluftführung zur Abtriebsseite hin vorbekannt sind.

Schließlich ist auch aus der DE-A-30 12 715 bereits ein explosionsgeschützter Elektromotor bekannt, bei dem es sich um einen Antriebsmotor für Faß- oder Behälterpumpen handelt. Dieser Motor besitzt ein druckfest gekapseltes metallisches Gehäuse und ist mit einer Doppelschutzisolierung versehen, in dem alle berührbaren bzw. nach außen führenden Teile zusätzlich zu den üblichen Isolierungen nochmals isoliert sind. Bei der zusätzlichen Isolierung handelt es sich um eine innere Auskleidung des Motorgehäuses mit einem isolierenden Kunststoffmantel und eine entsprechende Verkleidung der Motorwelle sowie um Abschirmungen der Wellendurchführungen mittels auf der Motorwelle sitzender Lüfterräder aus Kunststoff. In gleicher Weise wie das Motorgehäuse sind mit diesem verbundene, ebenfalls druckfest gekapselte Anschluß- und Schaltergehäuse innenseitig mit isolierenden Kunststoffmänteln ausgekleidet.

Bei diesem vorbekannten Elektromotor ist jedenfalls solange, wie die zusätzlichen Isolierungen in Form von Kunststoffmänteln nicht beschädigt sind, sichergestellt, daß von einer Bedienungsperson berührbare Teile nicht an Spannung liegen können. Unbefriedigend hingegen erscheinen einerseits der große bauliche Aufwand und andererseits Probleme der Wärmeableitung nach außen, die durch die Innenauskleidung des Gehäuses mit Kunststoff bedingt ist.

Ausgehend von dem Stande der Technik nach der DE-OS 35 14 685 soll durch die Erfindung ein verbesserter Elektromotor der obengenannten Art und Zweckbestimmung geschaffen werden, der bei einfachem Aufbau den Einsatzerfordernissen in explosionsgefährdeten Räumen genügt und insbesondere als Antriebsmotor für Faß- oder Behälterpumpen zum Fördern auch brennbarer und/oder ätzender Flüssigkeiten geeignet und bestimmt ist.

Gelöst ist diese Aufgabe dadurch, daß bei dem mit Doppelschutzisolierung versehenen Elektromotor nach dem Oberbegriff des Patentanspruchs 1 das Motorgehäuse gekapselt ist und zwischen der von der Motorabtriebsseite abgewandten Gehäusekappe und einem zwischen dieser und der anderen Gehäusekappe aufgenommenen Mantel, der unter Ausbildung von Durchströmspalten für die Kühlluft das Gehäusemittelteil umschließt, in die Durchströmspalte einmündende Kühlluft-Einlaßschlitze angeordnet sind, daß die von der Abtriebsseite abgewandte Gehäusekappe einen über die Kühlluft-Einlaßschlitze axial hinausragenden Flansch aus isolierendem Kunststoff besitzt, der mit Abstand von dem das Gehäusemittelteil umschließenden Mantel übergriffen ist und den angrenzenden Randbereich des Gehäusemittelteils außenseitig übergreift, und daß das Lüfterrad als Axialrad ausgebildet und innerhalb der einen abtriebsseitigen Lagerschild des Motorgehäuses übergreifenden Gehäusekappe aufgenommen ist, durch die sich über das Lüfterrad nach außen geführte, mit den Durchströmspalten in Strömungsverbindung stehende und abtriebsseitig im wesentlichen axialgerichtet ausmündende Abströmwege für die Kühlluft erstrecken.

Durch eine derartige Ausbildung ist sichergestellt, daß unbeschadet der dem Gehäusemittelteil zugewandten Kühlluft-Einlaßschlitze direkte Berührungen mit dem Gehäusemittelteil nicht vorkommen können, weil bei dem erfindungsgemäßen Motor das Motorgehäuse und alle metallischen Teile, an denen bei etwaigen Beschädigungen der Isolation Spannung anliegen könnte, innerhalb der äußeren Umhüllung aus elektrisch nicht leitendem Kunststoff aufgenommen sind.

Bei diesem Motor wird die mittels des in der abtriebsseitigen Gehäusekappe angeordneten Lüfterrades geförderte Kühlluft von der vom Abtrieb abgewandten Seite durch die Kühlluft-Einlaßschlitze zwischen dem Mantel und der dieser Seite zugeordneten Gehäusekappe angesaugt und strömt im wesentlichen axialgerichtet abtriebsseitig ab, also nach der von einer Bedienungsperson entfernten Seite. Dies ist insbesondere bei der Verwendung des Motors als Antriebsmaschine für Faß- oder Behälterpumpen insofern von Bedeutung, als von den geförderten Flüssigkeiten aufsteigende Dämpfe, die explosibel oder ätzend sein können, nicht zur Bedienungsperson hingefördert werden.

Gemäß einer Weiterbildung der Erfindung kann die das Laufradgitter bildende Beschaufelung aus - axial gesehen - in Umfangsrichtung unmittelbar benachbarten, einander gegebenenfalls begrenzt überlappenden Schaufeln bestehen, so daß zufällige Berührungen metallischer Teile des Motors durch das Laufradgitter hindurch ausgeschlossen sind.

Ebenfalls im Interesse einer vorteilhaften Kühlluft-Führung sieht eine andere Weiterbildung vor, daß der Aufnahmeraum für das Lüfterrad innerhalb der den abströmseitigen Lagerschild übergreifenden Gehäusekappe von einem in letztere eingesetzten glatten Luftleitring radial begrenzt ist, der das Lüfterrad mit Spiel umschließt. Im Interesse einer vorteilhaften Umsetzung von Strömungsenergie in statische Druckenergie kann der abströmseitige Abschnitt des Luftleitringes als sich radial erweiternder Diffusor ausgebildet und darüber hinaus eine sich abströmseitig an den Luftleitring anschließende sprunghafte radiale Querschnittserweiterung der Abströmwege für die Kühlluft vorgesehen sein, die einen Sprungdiffusor bildet.

Wiederum im Interesse günstiger Strömungsverhältnisse können gemäß einer anderen Weiterbildung die Durchströmspalte zwischen dem Gehäusemittelteil und dem dieses umschließenden Mantel aus elektrisch nicht leitendem Material im wesentlichen parallel zur Motorwelle gerichtet verlaufen und in Umfangsrichtung durch sich außenseitig am Gehäusemittelteil abstützende Rippen des Mantels begrenzt sein. Eine derartige Ausbildung des das Gehäusemittelteil umschließenden Mantels mit sich außenseitig am Gehäusemittelteil abstützenden Rippen führt auch zu einem außerordentlich stabilen Aufbau der Ummantelung des Gehäusemittelteils, der auch auftretenden Schlagbeanspruchungen innerhalb der bei bestimmungsgemäßer Verwendung in Betracht kommenden Grenzen standhält.

Ebenfalls gemäß einer Weiterbildung ist die von dem auf der Motorwelle aufgenommenen Lüfterrad entfernte Gehäusekappe als Anschlußgehäuse und nach außen geschlossenes Schaltergehäuse ausgebildet. Zweckmäßigerweise besteht die von der Abtriebsseite entfernte Gehäusekappe aus einem das Schaltergehäuse umschließenden und mit dem Gehäusemittelteil fest verbundenen metallischen Grundkörper und einer letzteren außenseitig umgebenden Kunststoffumspritzung, die eine wirksame elektrische Abschirmung des metallischen Grundkörpers vermittelt.

Obgleich die Doppelschutzisolierung des Motors beliebig ausgebildet sein kann, hat es sich, ebenfalls im Rahmen einer Weiterbildung der Erfindung, als vorteilhaft erwiesen, wenn der metallische Grundkörper der von der Abtriebsseite entfernten Gehäusekappe mit Kunststoff ausgespritzte Hohlräume für die Aufnahme von Befestigungsschrauben oder dergleichen in der jeweiligen Kunststoffausspritzung ohne Berührung mit dem metallischen Grundkörper aufweist, wobei die Kunststoffausspritzungen der genannten Hohlräume in letzteren zweckmäßigerweise formschlüssig verankert sind. Durch diese Maßnahme entfällt der ansonsten erforderliche Einsatz von Isolierhülsen. In gleicher Weise kann ein Griff zum Führen des Motors mittels in Kunststoffausspritzungen von Hohlräumen im metallischen Grundkörper der Gehäusekappe berührungslos mit dem Grundkörper eingeschraubter Befestigungsschrauben fest mit der Gehäusekappe verbunden sein.

Nach einem besonders wichtigen Ausgestaltungsmerkmal ist das nach außen abgeschlossene Schaltergehäuse druckfest gekapselt und zwischen dem Schaltergehäuse und dem benachbarten Lagerschild ist eine die thermische Belastung des im Schaltergehäuse aufgenommenen Schalters mindernde Wärmeschutzplatte angeordnet, auf welcher der Schalter befestigt sein kann.

Nach einem wiederum anderen Ausgestaltungsmerkmal kann in an sich bekannter Weise vorgesehen sein, daß die Abschirmungen der Lagerschilde und des Gehäusemittelteils außenseitig mit einer elektrisch leitenden Beschichtung versehen sind, die das Auftreten elektrostatischer Aufladungen verhindert bzw. deren gefahrlose Ableitung vermittelt. Bei dieser Beschichtung kann es sich um eine Rußeinbettung in den Außenzonen der Abschirmungen handeln. Alternativ dazu können aber auch der das Gehäusemittelteil außenseitig umschließende Mantel und die die Lagerschilde übergreifenden Gehäusekappen aus einem elektrostatische Aufladungen ableitenden homogenen Kunststoff bestehen bzw. mit derartigem Kunststoff umspritzt sein. Zweckmäßigerweise sollten der das Gehäusemittelteil umschließende Mantel und die Gehäusekappen bzw. die Umspritzung der von der Abtriebsseite entfernten Gehäusekappe aus Kunststoff mit einem Durchgangswiderstand von etwa 10⁸ Ohm und einem Oberflächenwiderstand ≦ 10⁹ Ohm bestehen.

Auch hat es sich, gleichfalls im Rahmen einer Weiterbildung der Erfindung, als vorteilhaft erwiesen, wenn die beiden Gehäusekappen mit dem zwischen Ihnen aufgenommenen Mantel mittels am Gehäusemittelteil festgelegter Isolierhülsen aus elektrisch nicht leitendem Material mit in diesem unverlierbar aufgenommenen Mutterteilen und in letztere eingeschraubter Befestigungsschrauben axialfest miteinander verbunden sind.

Eine Ausführungsform der Erfindung, die in der beigefügten Zeichnung veranschaulicht ist, soll nachstehend erläutert werden. In schematischen Ansichten zeigen:

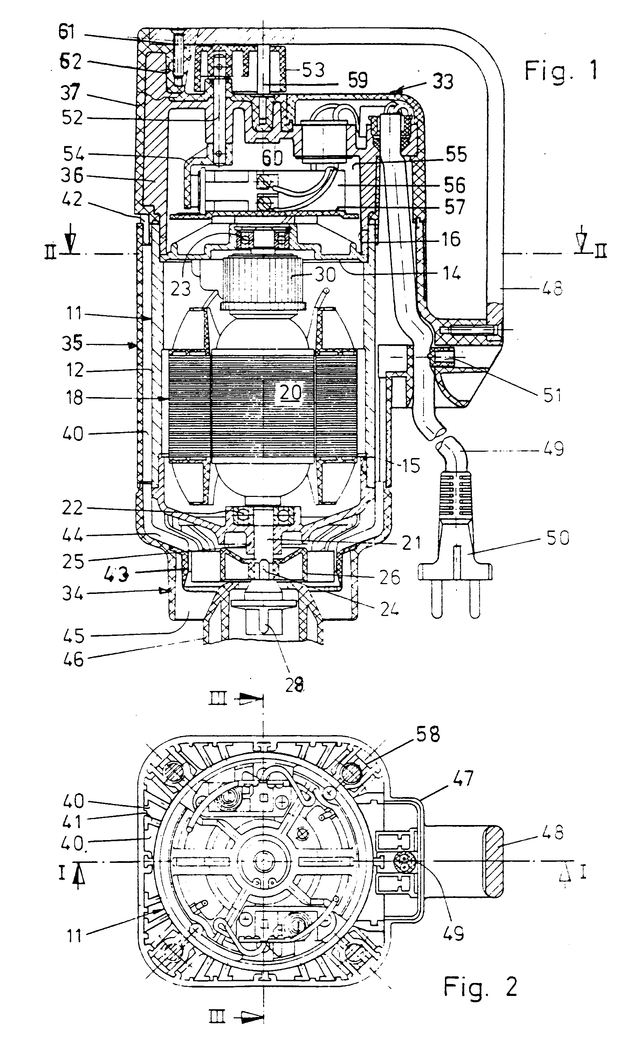

- Fig. 1: einen dem Schnittverlauf I-I in Fig. 2 folgenden Mittellängsschnitt durch den Motor und dessen beidendige Gehäusekappen
- Fig. 2.: einen gemäß der Schnittlinie II-II in Fig. 1 verlaufenden Querschnitt durch den Motor im Bereich des von der Abtriebsseite entfernten Lagerschildes und

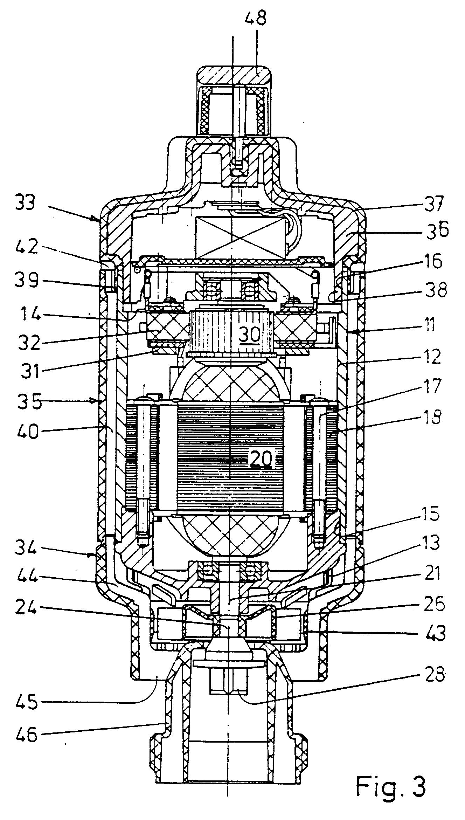

- Fig. 3: einen um 90° gegenüber Fig. 1 gedrehten Mittellängsschnitt nach der Schnittlinie III-III in Fig. 2 durch den Motor.

Bei dem in der Zeichnung veranschaulichten Ausführungsbeispiel handelt es sich um einen Motor 10 zum Antrieb einer nicht dargestellten Faßpumpe, dessen beispielsweise aus Aluminiumguß hergestelltes Motorgehäuse 11 aus einem rohrförmigen Gehäusemittelteil 12 und zwei dieses an beiden Stirnenden abschließenden Lagerschilden 13, 14 besteht. Die beiden Lagerschilde sind in bekannter Weise in stirnseitige Ausdrehungen 15, 16 des Gehäusemittelteils 12 eingesetzt. Innerhalb des Gehäusemittelteils 12 ist der im übrigen mittels durchgehender Schraubenbolzen 17 stirnseitig an dem abtriebsseitigen Lagerschild 13 befestigte Stator 18 aufgenommen.

Die den Anker 20 tragende Motorwelle 21 ist in je einem seinerseits jeweils in einem der Lagerschilde 13, 14 aufgenommenen Lager 22, 23 drehbar gelagert. Abtriebsseitig erstreckt sich die Motorwelle mit einem Wellenstumpf 24 durch eine Nabe 25 des Lagerschildes 13 hindurch, an dem der Stator 18 befestigt ist. Auf dem abtriebsseitigen aus dem Motorgehäuse 11 herausgeführten Wellenstumpf 24 ist unmittelbar an die Nabe 25 des Lagerschildes 13 angrenzend ein aus elektrisch nicht leitendem Material bestehendes Lüfterrad 26 zum Fördern von Kühlluft drehfest aufgenommen. Das freie Ende des abtriebsseitigen Wellenstumpfs 24 der Motorwelle ist mit einer hier nicht weiter interessierenden, ebenfalls aus elektrisch nicht leitendem Material bestehenden Schnellkupplungseinrichtung 28 zum Ankuppeln der Antriebswelle einer nicht gezeigten Faßpumpe ausgerüstet. Die Schnellkupplungseinrichtung bildet gleichzeitig eine isolierende Abschirmung der Motorwelle.

Im Bereich des vom Lüfterrad 26 entfernten Lagerschildes 14 ist die Stromwendevorrichtung mit einem koaxial zum Anker 20 drehfest auf dem von der Schnellkupplungseinrichtung 28 entfernten Ende der Motorwelle 21 aufgenommenen Kollektor 30 angeordnet, während die Bürstenhalter 31 mit den am Kollektor anliegenden Kohlebürsten 32 gehäuseinnenseitig am Lagerschild 14 befestigt sind, was indessen im einzelnen hier nicht interessiert.

Das aus dem rohrförmigen Gehäusemittelteil 12 und je einem abtriebs- und kollektorseitigen Lagerschild 13, 14 bestehende Motorgehäuse 11 ist mittels je einer die Lagerschilde übergreifenden Gehäusekappe 33, 34 und einem zwischen diesen aufgenommenen, das Gehäusemittelteil 12 umschließenden Mantel 35 nach außen vollständig abgeschirmt. Die abtriebsseitige Gehäusekappe 34 und der Mantel 35 bestehen aus elektrisch nicht leitendem Material, während die kollektorseitige Gehäusekappe 33 aus einem metallischen Grundkörper 36 mit einer äußeren Umspritzung 37 aus gleichfalls elektrisch nicht leitendem Material besteht. Es liegt somit eine Abschirmung nach außen in solcher Weise vor, daß es bei bestimmungsgemäßem Einsatz des Motors 10 nicht zu Berührungen des metallischen und mithin leitfähigen Motorgehäuses kommen kann. Bei der aus nicht leitendem Material bestehenden Gehäusekappe 34 und dem das Gehäusemittelteil 12 umschließenden Mantel 35 handelt es sich um formfeste Kunststoffteile, die ebenso wie die Umspritzung 37 des metallischen Grundkörpers 36 der Gehäusekappe 33 zum Ableiten etwaiger elektrostatischer Aufladungen entweder außenseitig mit einer elektrisch leitenden Beschichtung versehen oder insgesamt für die Ableitung elektrostatischer Aufladungen ausgelegt sind. So können in diese Teile Rußpartikel eingebettet sein, was jedoch an sich bekannt ist und daher keiner weiteren Erörterung bedarf.

Der metallische Grundkörper 36 der kollektorseitigen Gehäusekappe 33 besitzt einen ringzylindrischen Anschlußflansch 38, der in die sich von der benachbarten Stirnseite aus in das Gehäusemittelteil 12 hineinerstreckende Eindrehung 16 hineinragt und sich bis zur Anlage an den in dieser Eindrehung aufgenommenen Lagerschild 14 erstreckt. Ein ähnlich ausgebildeter zylindrischer Flansch 39 aus Kunststoff übergreift außenseitig den kollektorseitigen Rand des Gehäusemittelteils 12 etwa bis zu der von dem kollektorseitigen Lagerschild 14 aufgespannten Querebene.

Der das Gehäusemittelteil 12 nach außen abschirmende Mantel 35 umschließt das Gehäusemittelteil unter Ausbildung axialgerichteter Durchströmspalte 40. Dieser Mantel ist mit im Abstand voneinander verlaufenden radialen Rippen 41 versehen, die außenseitig am Gehäusemittelteil 12 anliegen und mithin die sich zwischen dem Mantel 35 und dem Gehäusemittelteil erstreckenden Durchströmspalte 40 in Umfangsrichtung begrenzen. Im Bereich des kollektorseitigen Lagerschildes 14 erstreckt sich der Mantel 35 axial über den den betreffenden Randbereich des Gehäusemittelteils 12 außenseitig übergreifenden äußeren Randflansch 39 der kollektorseitigen Gehäusekappe 33 hinaus und zwischen dem betreffenden Ende des Mantels 35 und dem aus Kunststoff bestehenden Randflansch 39 dieser Gehäusekappe sind Kühlluft-Einlaßschlitze 42 ausgebildet, die in die Durchströmspalte 40 zwischen dem Gehäusemittelteil 12 und dem dieses mit Abstand umschließenden Mantel 35 einmünden.

Die das abtriebsseitige Lagerschild 13 als äußere Abschirmung übergreifende Gehäusekappe 34 schließt sich unmittelbar an den das Gehäusemittelteil 12 umgebenden Mantel 35 an. Durch diese Gehäusekappe erstrecken sich mit den Durchströmspalten 40 zwischen dem Gehäusemittelteil 12 und den dieses umgebenden Mantel 35 in Strömungsverbindung stehende Abströmwege 44 für Kühlluft hindurch, die über ein Leitgitter 45 mit im wesentlichen axialgerichteten Leitschaufeln am abtriebsseitigen Ende dieser Gehäusekappe ausmünden. Diese Abströmwege sind über das innerhalb dieser Gehäusekappe aufgenommene Lüfterrad 26 geführt, das mit radialem Spiel von einem eingesetzten glatten Luftleitring 43 umschlossen ist. Der Luftleitring besitzt abströmseitig eine radiale Erweiterung, die einen Diffusor bildet und an den Luftleitring schließt sich in Strömungsrichtung eine als Sprungdiffusor wirkende radiale Querschnittserweiterung an. Ferner ist abtriebsseitig vom Lüfterrad 26 eine mit der genannten Gehäusekappe 34 in hier nicht weiter interessierender Weise fest verbundene glockenartige Abschirmung 46 des abtriebsseitigen Wellenstumpfs 24 der Motorwelle 21 mit der Schnellkupplungsvorrichtung 28 angeordnet, die naturgemäß ebenfalls aus elastisch nicht leitendem Material besteht.

Der das Gehäusemittelteil 12 unter Ausbildung von Durchströmspalten 40 umschließende Mantel 35 ist - im Querschnitt gesehen - als Rechteck mit abgerundeten Ecken ausgebildet und im Bereich einer Außenfläche mit einem sich von der Kollektorseite aus etwa über die halbe Länge des Gehäusemittelteils erstreckenden Kanal 47 versehen. Mit einer Konsole dieses angeformten Kanals ist ein Ende eines bügelartigen Griffs 48 zum Führen des Motors verschraubt. In diesem Kanal erstreckt sich ein den elektrischen Anschluß vermittelndes Kabel 49 mit einem Stecker 50 an seinem freien Ende, das aus der Gehäusekappe 33 herausgeführt und im Bereich der Konsole mittels einer Klemmschelle 51 festgelegt und dadurch zugentlastet ist. Die stromführenden Leitungen des Kabels 49 sind in hier nicht weiter interessierender Weise innerhalb der als Anschlußund Schaltergehäuse ausgebildeten Gehäusekappe 33 an stromführende Teile des Motors angeschlossen.

Im Bereich zwischen dem vom kollektorseitigen Lagerschild entfernten Ende der Gehäusekappe 33 und dem mit dieser verbundenen Haltegriff 48 ist ein um einen Lagerzapfen 52 schwenkbarer Drehgriff 53 aufgenommen, der gleichfalls aus elektrisch nicht leitendem Material besteht und über einen in einer entsprechenden Lagerung der Gehäusekappe drehbar aufgenommenen Lagerzapfen 52 drehfest mit einem innerhalb der Gehäusekappe drehbar gelagerten Betätigungselement 54 für einen im Schaltergehäuse 55 angeordneten Schalter 56 verbunden ist. Der Schalter 56 ist auf einer das Schaltergehäuse zum Lagerschild 14 hin thermisch abschirmenden Wärmeschutzplatte 57 angeordnet.

Im Interesse eines einfachen und kostensparenden Aufbaues sind bei voller Gewährleistung der Doppelschutzisolierung alle nach außen führenden Schrauben gegenüber metallischen Motorteilen voll isoliert. So dienen zur Verbindung der Gehäusekappen 33, 34 mit dem Motorgehäuse 11 am Gehäusemittelteil 12 beidendig in - nicht gezeigte - Queraussparungen der Rippen 41 eingehängte Isolierhülsen 58 aus Kunststoff mit in diesen eingebetteten Mutterteilen und in die Mutterteile eingeschraubte Befestigungsschrauben, die ebenso wie die Mutterteile keinerlei Kontakt mit metallischen Motorteilen haben. Auch die Lagerung des Drehgriffs 53 zum Betätigen des Schalters 56 und die Befestigung des bügelartigen Griffs 48 haben keinerlei metallischen Kontakt mit dem Grundkörper 36 der kollektorseitigen Gehäusekappe 33. Der Lagerung des Drehgriffes 53 dient ein Lagerzapfen 59, der mit seinem einen Ende in der Kunststoffausspritzung 60 eines entsprechend angeordneten Hohlraums des metallischen Grundkörpers 36 aufgenommen ist. In gleicher Weise ist eine Schraube 61 zur Befestigung des dem Drehgriff 53 benachbarten Endes des bügelartigen Griffs 48 in einer Kunststoffausspritzung 62 im Grundkörper 36 ohne metallische Berührung mit dem Grundkörper aufgenommen. Die Kunststoffausspritzungen derartiger Hohlräume im Grundkörper der Gehäusekappe sind in geeigneter Weise formschlüssig gehalten. Zu diesem Zweck können die mit Ausspritzungen ausgefüllten Hohlräume Hinterschneidungen aufweisen oder mit Gewinde versehen sein, was im einzelnen jedoch nicht interessiert.

Bei bestimmungsgemäßem Einsatz des als Ausführungsbeispiel veranschaulichten Elektromotors 10 wird dieser von einer Bedienungsperson mittels des bügelartigen Haltegriffs 48 geführt. Beim Betrieb des Motors wird von dem auf dem abtriebseitigen Wellenstumpf 21 aufgenommenen Lüfterrad 26 Kühlluft durch die Einlaßschlitze 42 zwischen der kollektorseitigen Gehäusekappe 33 und dem das Gehäusemittelteil 12 umschließenden Mantel 35 angesaugt, die dann die Durchströmspalte 40 zwischen dem Mantel und dem Gehäusemittelteil durchströmt und über die abtriebsseitig im wesentlichen axialgerichtet aus der abtriebsseitigen Gehäusekappe 34 ausmündenden Abströmwege 44 mit dem abströmseitigen Leitgitter 45 abgeführt wird. Die Kühlluftführung findet mithin nach der von der Bedienungsperson weggerichteten Seite statt. Diesem Umstand kommt dann besondere Bedeutung zu, wenn der Motor beispielsweise als Faßpumpenmotor Verwendung findet und mit einer derartigen Faßpumpe Medien gefördert werden, von denen ggf. gesundheitsbeeinträchtigende Dämpfe ausgehen.

Die vollständige Abschirmung aller metallischen Teile des Motors nach außen stellt sicher, daß auch dann eine Bedienungsperson keine elektrischen Schläge erleiden kann, wenn Isolierungen der stromführenden Teile im Motorinneren und/oder im Schalter- bzw. Anschlußgehäuse schadhaft sind und insoweit im Betrieb des Motors Spannung am eigentlichen Motorgehäuse anliegen kann. Desgleichen ist die Ableitung etwaiger elektrostatischer Aufladungen durch die besondere Ausbildung der außenseitigen Abschirmung des Motorgehäuses gewährleistet.

## Patentansprüche

1. Elektromotor mit einem Motorgehäuse (11), in dem der Stator (18) und Läufer (20) aufgenommen sind und letzterer drehbar gelagert ist, mit einem auf der aus dem Motorgehäuse (11) herausgeführten Motorwelle (21) drehfest angeordneten Lüfterrad (26) zum Fördern von Kühlluft, mit einer zwei Gehäusekappen (33, 34) aufweisenden äußeren Umhüllung (33, 34, 35) aus elektrisch nicht leitenden Material, innerhalb der das Lüfterrad (26) aufgenommen ist und die unter Ausbildung von Durchströmwegen (40,44) für Kühlluft das Motorgehäuse (11) zwecks Außenbelüftung und zur Schutzisolierung umschließt, und mit einer elektrisch nicht leitenden Verkleidung des abtriebsseitigen Endes der Motorwelle (21), insbesondere Antriebsmotor für eine Faß- oder Behälterpumpe,
dadurch gekennzeichnet,
daß bei dem mit Doppelschutzisolierung versehenen Motor das Gehäuse (11) gekapselt ist und zwischen der von der Motorabtriebsseite abgewandten Gehäusekappe (33) und einem zwischen dieser und der anderen Gehäusekappe (34) aufgenommenen Mantel (35), der unter Ausbildung von Durchströmspalten (40) für die Kühlluft das Gehäusemittelteil (12) umschließt, in die Durchströmspalte (40) einmündende Kühlluft-Einlaßschlitze (42) angeordnet sind, daß die Gehäusekappe (33) einen über die Kühlluft-Einlaßschlitze (42) axial hinausragenden Flansch (39) aus Kunststoff besitzt, der mit Abstand von dem das Gehäusemittelteil (12) umschließenden Mantel (35) übergriffen ist und den angrenzenden Randbereich des Gehäusemittelteils (12) übergreift, und daß das Lüfterrad (26) als Axialrad ausgebildet und innerhalb der einen abtriebsseitigen Lagerschild (15) des Gehäuses (11) übergreifenden Gehäusekappe (34) aufgenommen ist, durch die sich über das Lüfterrad (26) nach außen geführte, mit dem Durchströmspalt (40) in Strömungsverbindung stehende und abtriebsseitig im wesentlichen axialgerichtet ausmündende Abströmwege (44) für die Kühlluft erstrecken.

2. Elektromotor nach Anspruch 1, dadurch gekennzeichnet, daß die Beschaufelung des Laufrades (26) aus - axial gesehen - in Umfangsrichtung unmittelbar benachbarten, einander gegebenenfalls begrenzt überlappenden Schaufeln besteht.

3. Elektromotor nach einem der Ansprüche 1 oder 2, dadurch gekennzeichnet, daß der Aufnahmeraum für das Lüfterrad (26) innerhalb der den abtriebsseitigen Lagerschild übergreifenden Gehäusekappe (34) von einem in letztere eingesetzten glatten Luftleitring (43) radial begrenzt ist, der das Lüfterrad mit Spiel konzentrisch umschließt.

4. Elektromotor nach Anspruch 3, dadurch gekennzeichnet, daß der abströmseitige Abschnitt des Luftleitrings (43) als sich radial erweiternder Diffusor ausgebildet ist.

5. Elektromotor nach Anspruch 3 oder 4, dadurch gekennzeichnet, daß sich abströmseitig an den Luftleitring (43) eine radiale Querschnittserweiterung der Abströmwege für die Kühlluft anschließt, die einen Sprungdiffusor bildet.

6. Elektromotor nach einem der Ansprüche 1 bis 5, dadurch gekennzeichnet, daß die Durchströmspalte (40) zum Führen von Kühlluft zwischen dem Gehäusemittelteil (12) und dem dieses umschließenden Mantel (35) im wesentlichen parallel zur Motorwelle (21) verlaufen und in Umfangsrichtung durch sich außenseitig am Gehäusemittelteil abstützende Rippen (41) des Mantels (35) begrenzt sind.

7. Elektromotor nach Anspruch 1, dadurch gekennzeichnet, daß die von dem auf der Motorwelle (21) aufgenommenen Lüfterrad (26) entfernte Gehäusekappe (33) als Anschlußgehäuse und nach außen geschlossenes Schaltergehäuse (55) ausgebildet ist.

8. Elektromotor nach Anspruch 7, dadurch gekennzeichnet, daß die von der Abtriebsseite entfernte Gehäusekappe (33) aus einem das Schaltergehäuse (55) umschließenden metallischen Grundkörper (36), der mit dem Gehäusemittelteil (12) verbunden ist, und einer den Grundkörper außenseitig umgebenden Kunststoffumspritzung (37) besteht.

9. Elektromotor nach Anspruch 8, dadurch gekennzeichnet, daß der metallische Grundkörper (36) der Gehäusekappe (33) mit Kunststoff ausgespritzte Hohlräume für die Aufnahme von Befestigungsschrauben oder dergleichen in der jeweiligen Kunststoffausspritzung (60, 62) ohne Berührung mit dem metallischen Grundkörper aufweist, und daß die Kunststoffausspritzungen der genannten Hohlräume in letzteren formschlüssig verankert sind.

10. Elektromotor nach Anspruch 8 oder 9, dadurch gekennzeichnet, daß ein Griff (48) zum Führen des Motors mittels in Kunststoffausspritzungen von Hohlräumen im metallischen Grundkörper (36) der Gehäusekappe (33) berührungslos mit dem Grundkörper eingeschraubter Befestigungsschrauben (61) fest mit der Gehäusekappe verbunden ist.

11. Elektromotor nach einem der Ansprüche 7 bis 10, gekennzeichnet durch die druckfeste Kapselung des nach außen abgeschlossenen Schaltergehäuses (55).

12. Elektromotor nach einem der Ansprüche 7 bis 11, dadurch gekennzeichnet, daß zwischen dem Schaltergehäuse (55) und dem benachbarten Lagerschild (14) eine Wärmeschutzplatte (57) angeordnet ist.

13. Elektromotor nach Anspruch 12, dadurch gekennzeichnet, daß ein innerhalb des Schaltergehäuses (55) aufgenommener Schalter (56) zum Ein- und Ausschalten des Motors auf der Wärmeschutzplatte (57) angeordnet ist.

14. Elektromotor nach einem der Ansprüche 1 bis 13, dadurch gekennzeichnet, daß der das Gehäusemittelteil (12) außenseitig umschließende Mantel (35) und die die Lagerschilde (13, 14) übergreifenden Gehäusekappen (33, 34) mit einer elektrisch leitenden Beschichtung zum Ableiten elektrostatischer Aufladungen versehen sind.

15. Elektromotor nach Anspruch 14, dadurch gekennzeichnet, daß die Beschichtung des Mantels (35) und der Gehäusekappen (33, 34) aus einer Rußeinbettung in den Außenzonen der genannten Teile besteht.

16. Elektromotor nach einem der Ansprüche 1 bis 15, dadurch gekennzeichnet, daß der das Gehäusemittelteil (12) außenseitig umschließende Mantel (35) und die die Lagerschilde übergreifenden Gehäusekappen (33, 34) aus einem elektrostatische Aufladungen ableitenden homogenen Kunststoff bestehen bzw. mit einer Umspritzung (37) aus derartigem Kunststoff versehen sind.

17. Elektromotor nach einem der Ansprüche 1 bis 16, dadurch gekennzeichnet, daß der Mantel (35) und die Gehäusekappen (33, 34) bzw. die Umspritzung (37) der Gehäusekappe (33) aus Kunststoff mit einem Durchgangswiderstand von etwa 10⁸ Ohm und einem Oberflächenwiderstand 10⁹ Ohm bestehen.

18. Elektromotor nach einem der Ansprüche 1 bis 17, dadurch gekennzeichnet, daß die beiden Gehäusekappen (33, 34) mit dem zwischen ihnen aufgenommenen Mantel (35) mittels am Gehäusemittelteil (12) festgelegter Isolierhülsen (58) aus elektrisch nicht leitendem Material mit in diesem unverlierbar aufgenommenen Mutterteilen und in letztere eingeschraubter Befestigungsschrauben axialfest miteinander verbunden sind.

## Claims

1. Electric motor with a motor housing (11), in which the stator (18) and rotor (20) are received and the latter is mounted to be rotatable, with a fan wheel (26), which is arranged rotationally fast on the motor shaft (21) led out of the motor housing (11), for the conveying of cooling air, with an outer casing (33, 34, 35), of electrically non-conductive material; which comprises two housing caps (33, 34) and within which the far wheel (26) is received, the casing enclosing the motor housing (11) for the purpose of fan cooling and for protective insulation while forming flow paths (40, 44) for cooling air, and with an electrically non-conductive covering of the output end of the motor shaft (21), particularly a drive motor for a keg or container pump, characterised thereby that in the motor provided with double protective insulation the housing (11) is enclosed and cooling air inlet slots (42) are arranged between the housing cap (33) remote from the motor output end and a jacket (35), which is received between that cap and the other housing cap (34) and surrounds the housing middle part (12) while forming flow gaps (40) for the cooling air, and open into the flow gaps (40), that the housing cap (33) comprises a flange (39), of synthetic material which projects axially beyond the cooling air inlet slots (42), which is engaged around at a spacing by the jacket (35) surrounding the housing middle part (12) and engages around the adjacent edge region of the housing middle part (12), and that the fan wheel (26) is constructed as an axial impeller and is received within the housing cap (34) engaging over an output-end bearing plate (15) of the housing (11), through which cap extend outflow paths (44) for the cooling air which are led outwards past the fan wheel (26), stand in flow connection with the flow gap (40) and at the output end open out substantially axially aligned.

2. Electric motor according to claim 1, characterised thereby that the blading of the fan wheel (26) consists of blades which - seen axially - directly adjoin in circumferential direction and in a given case limitedly overlap one another.

3. Electric motor according to one of claims 1 or 2, characterised thereby that the receiving space for the fan wheel (26) within the housing cap (34) engaging over the bearing plate at the output end is radially bounded by a smooth air guide ring (43) which is inserted in that cap and concentrically surround the fan wheel with play.

4. Electric motor according to claim 3, characterised thereby that the portion of the air guide ring (43) of the outflow slide is constructed as a radially widening diffuser.

5. Electric motor according to claim 3 or 4, characterised thereby that connected at the outflow side to the air guide ring (43) is a radial cross-section widening, which forms a surge diffuser, of the outflow paths for the cooling air.

6. Electric motor according to one of claims 1 to 5, characterised thereby that the flow gaps (40), for the guidance of cooling air between the housing middle part (12) and the jacket (35) surrounding this extend substantially parallel to the motor shaft (21) and are bounded in circumferential direction by ribs (41), which are outwardly supported on the housing middle part, of the jacket (35).

7. Electric motor according to claim 1, characterised thereby that the housing cap (33) remote from the fan wheel (26) received on the motor shaft (21) is constructed as a connection housing and outwardly closed switch housing (55).

8. Electric motor according to claim 7, characterised thereby that the housing cap (33) remote from the output end consists of a metallic base body (36), which surrounds the switch housing (55) and is connected with the housing middle part (12), and a synthetic material injected encapsulation (37) externally enclosing the base body.

9. Electric motor according to claim 9, characterised thereby that the metallic base body (36) of the housing cap (33) has hollow spaces injected with synthetic material, for the reception of fastening screws or the like in the respective synthetic material injection (60, 62) without contact with the metallic base body, and that the synthetic material injections of the said hollow spaces are mechanically positively anchored therein.

10. Electric motor according to claim 8 or 9, characterised thereby that a grip (48) for the guiding of the motor is firmly connected with the housing cap (33) by means of fastening screws (61) screwed, without contacting the base body (36), into synthetic material injections of hollow spaces in the metallic base body of the housing cap.

11. Electric motor according to one of claims 7 to 10, characterised by airtight enclosure of the outwardly closed-off switch housing (55).

12. Electric motor according to one of claims 7 to 11, characterised thereby that arranged between the switch housing (55) and the adjacent bearing plate (14) is a heat protection plate (57).

13. Electric motor according to claim 12, characterised thereby that arranged on the heat protection plate (57) is a switch (56), which is received within the switch housing (55), for the switching on and off of the motor.

14. Electric motor according to one of claims 1 to 13, characterised thereby that the jacket (35) outwarding surrounding the housing middle part (12) and the housing caps (33, 34) engaging over the bearing plate (13, 14) are provided with an electrically conductive coating for conducting away electrostatic charges.

15. Electric motor according to claim 14, characterised thereby that the coating of the jacket (35) and of the housing caps (33, 34) consists of a carbon the outer zones of the said parts.

16. Electric motor according to one of claims 1 to 15, characterised thereby that the jacket (35) externally surrounding the housing middle part (12) and the housing caps (33, 34) engaging over the bearing plate consist of a homogeneous synthetic material conducting away electrostatic discharges or are provided with an injecting around (37) of synthetic material of that kind.

17. Electric motor according to one of claims 1 to 16, characterised thereby that the jacket (35) and the housing caps (33, 34) or the injected encapsulation (37) of the housing cap (33) consists of a synthetic material with an electrical cross-flow resistance of about 10⁸ ohms and a surface resistance of 10⁹ ohms.

18. Electric motor according to one of claims 1 to 17, characterised thereby that the two housing caps (33, 34) with the jacket (35) received therebetween are connected together axially securely by means of insulating sleeves (58) of electrically non-conductive material, which are fixed to the housing middle part (12), with nut elements non-detachably received therein and fastening screws screwed into the nut elements.

## Revendications

1. Moteur électrique comportant un carter (1) dans lequel sont logés le stator (18) et le rotor (20), ce dernier étant logé en rotation ; une roue de ventilateur (26), fixée en rotation sur l'arbre (21), sortant du carter (11), et étant destinée à refouler de l'air de refroidissement ; une enveloppe extérieure (33, 34, 35) comportant deux calottes (33, 34) en un matériau non électroconducteur, enveloppe à l'intérieur de laquelle est logée la roue de ventilateur (26), et qui, avec formation de voies de passage (40, 44) pour l'air de refroidissement, entoure le carter (11) pour assurer la ventilation extérieure et l'isolation de protection ; et un revêtement non électroconducteur de l'extrémité côté sortie de l'arbre (21); en particulier moteur d'entraînement pour une pompe électrique portative ou une pompe immersible, caractérisé en ce que, dans le moteur pourvu d'une double isolation, le carter (11) est blindé et, entre la calotte (33) opposée au côté sortie du moteur et une chemise (35), logée entre cette calotte et l'autre calotte (34), chemise qui, avec formation de fentes de passage (40) pour l'air de refroidissement, entoure la partie centrale (12) du carter, sont disposées des rainures d'admission d'air de refroidissement (42) débouchant dans les fentes de passage ; que la calotte (33) possède une collerette (39) en plastique, qui dépasse axialement des fentes de passage (42) destinées à l'air de refroidissement, et qui, avec un certain écartement, est recouverte de la chemise (35) entourant la partie centrale (12) du carter et recouvre la zone marginale voisine de la partie centrale (12) du carter ; et que la roue de ventilateur (26) est conçue comme une roue axiale et est logée à l'intérieur de la calotte (34), qui recouvre une flasque (15), côté sortie, du carter (11), et à travers laquelle s'étendent les voies d'évacuation (44) de l'air de refroidissement, guidées vers l'extérieur par l'intermédiaire de la roue de ventilateur (26), se trouvant en liaison d'écoulement avec les fentes de passage (40) et débouchant essentiellement dans une direction axiale côté sortie.

2. Moteur électrique selon la revendication 1, caractérisé en ce que l'aubage de la roue à aubes (26) est, quand on regarde dans une direction axiale, constitué d'aubes immédiatement voisines les unes des autres dans le sens périphérique, et se chevauchant éventuellement les unes les autres d'une manière limitée.

3. Moteur électrique selon l'une des revendications 1 ou 2, caractérisé en ce que le logement de la roue à aubes (26) est limité dans le sens radial, à l'intérieur de la calotte (34) qui recouvre la flasque côté sortie, par une bague de guidage d'air (43), lisse, installée dans cette calotte, bague qui entoure la roue de ventilateur d'une manière concentrique avec jeu.

4. Moteur électrique selon la revendication 3, caractérisé en ce que la partie côté évacuation de la bague de guidage d'air (43) est conçue comme un diffuseur s'évasant radialement.

5. Moteur électrique selon la revendication 3 ou 4, caractérisé en ce que la bague de guidage d'air (43) se poursuit, côté sortie, par un évasement transversal radial des voies d'évacuation de l'air de refroidissement, évasement formant un diffuseur discontinu.

6. Moteur électrique selon l'une des revendications 1 à 5, caractérisé en ce que les fentes de passage (40) destinées à guider l'air de refroidissement entre la partie centrale (12) du carter et la chemise (35) qui entoure cette dernière courent essentiellement d'une manière parallèle à l'arbre (21) et, dans le sens périphérique, sont limitées par des nervures (41) de la chemise (35), qui s'appuient sur le côté extérieur de la partie centrale du carter.

7. Moteur électrique selon la revendication 1, caractérisé en ce que la calotte (33), éloignée de la roue de ventilateur (26) logée sur l'arbre (21), est conçue comme un carter de raccordement et un couvercle (55) fermé vers l'extérieur.

8. Moteur électrique selon la revendication 7, caractérisé en ce que la calotte (33), éloignée du côté sortie, est constituée d'un corps de base métallique (36), qui entoure le couvercle (55) et est reliée à la partie centrale (12) du carter, et d'un plastique (37) mis en place par injection et entourant le corps de base par l'extérieur.

9. Moteur électrique selon la revendication 8, caractérisé en ce que le corps de base métallique (36) de la calotte (33) comporte des cavités, ayant reçu une injection de plastique, destinées à recevoir des vis de fixation ou analogues, dans le plastique moulé (60, 62) sans contact avec le corps métallique de base, et que les plastiques moulés par injection dans les cavités ci-dessus sont ancrés dans ces dernières par une liaison avec correspondance de forme.

10. Moteur électrique selon la revendication 8 ou 9, caractérisé en ce qu'une poignée (48), destinée à guider le moteur, est reliée à demeure à la calotte à l'aide de vis de fixation (61), vissées, sans contact avec le corps de base, dans les plastiques injectés dans les cavités aménagées dans le corps métallique de base (36) de la calotte (33).

11. Moteur électrique selon l'une des revendications 7 à 10, caractérisé en ce que le blindage du couvercle (55), fermé vers l'extérieur, est résistant à la pression.

12. Moteur électrique selon l'une des revendications 7 à 11, caractérisé en ce qu'une plaque calorifuge (57) est disposée entre le couvercle (55) et la flasque voisine (14).

13. Moteur électrique selon la revendication 12, caractérisé en ce qu'un commutateur (56), logé à l'intérieur du couvercle (55) et destiné à mettre le moteur en marche ou à l'arrêt, est disposé sur la plaque calorifuge (57).

14. Moteur électrique selon l'une des revendications 1 à 13, caractérisé en ce que la chemise (35), qui entoure par l'extérieur la partie centrale (12) du carter, et les calottes (33, 34) qui recouvrent les flasques (13, 14), sont pourvues d'un revêtement électroconducteur destiné à évacuer les charges électrostatiques.

15. Moteur électrique selon la revendication 14, caractérisé en ce que le revêtement de la chemise (35) et des calottes (33, 34) est constitué d'un enrobage de noir de carbone dans les zones extérieures des pièces mentionnées.

16. Moteur électrique selon l'une des revendications 1 à 15, caractérisé en ce que la chemise (35) qui entoure par l'extérieur la partie centrale (12) du carter et les calottes (33, 34) qui recouvrent les flasques sont constituées d'un plastique homogène pouvant évacuer les charges électrostatiques, ou sont pourvues d'un revêtement injecté (37) en un plastique du même type.

17. Moteur électrique selon l'une des revendications 1 à 16, caractérisé en ce que la chemise (35) et les calottes (33, 34) ou les revêtements plastiques (37) de la calotte (33) sont en un plastique ayant une résistance intérieure d'environ 10⁸ ohms et une résistance superficielle de 10⁹ ohms.

18. Moteur électrique selon l'une des revendications 1 à 17, caractérisé en ce que les deux calottes (33, 34), avec la chemise (35) logée entre elles, sont liées l'une à l'autre, d'une manière solidaire dans le sens axial, à l'aide de douilles isolantes (58), fixées contre la partie centrale (12) du carter et en un matériau non électroconducteur, avec des éléments d'écrou logés d'une manière imperdable dans ce dernier et des vis de fixation, vissées dans ces éléments d'écrou.
